# EUROPEAN PATENT SPECIFICATION

(11) **EP 1 800 961 B1**
(45) Date of publication and mention of the grant of the patent: **08.12.2010**
(21) Application number: 06026121.1
(22) Date of filing: 16.12.2006
(51) Int. Cl.: B60R 19/18

(54) **Shock absorbing material and vehicle bumper**
Stossabsorbierendes Material und Fahrzeug- Stossdämpfer aus diesem Material
Matériau amortissant les chocs et pare-chocs de véhicule utilisant ce matériau

(30) Priority: 26.12.2005 JP 2005372080
(43) Date of publication of application: 27.06.2007
(73) Proprietor: JSP CORPORATION, Tokyo 100-0005 (JP); NISSAN MOTOR CO., LTD., Yokohama-shi, Kanagawa (JP)
(72) Inventor: Shioya, Satoru, Kanuma-shi Tochigi (JP); Hashimoto, Keiichi, Kanuma-shi Tochigi (JP); Yoneyama, Yasuhiko, Kanuma-shi Tochigi (JP); Taniguchi, Masanori c/o Intellectual Property Department of, Kanagawa (JP); Hariya, Toshiyuki, Yokohama-shi Kanagawa (JP)
(74) Representative: Luderschmidt, Schüler & Partner

(56) References cited:
- EP-A- 1 393 985
- EP-A- 1 564 079
- DE-A1- 4 426 291
- JP-A- 2004 360 790
- US-A- 3 871 636

## Description

This invention relates to a vehicle bumper using a shock absorbing material for absorbing impact energy at the time of collision of an object such as a vehicle.

In order to protect a driver or passenger of an automobile and to prevent damage of an automobile body upon collision, a shock absorbing material is generally provided in a bumper, a ceiling, a door, etc. In the case of a vehicle bumper, it is highly desired that the bumper can also protect a pedestrian when struck by an automobile. More specifically, a vehicle bumper is desired to show, when subjected to a compression test, a strain-compressive load curve (hereinafter referred as "compression curve") in which the compressive load increases rapidly upon start of the compression and is kept, upon.further compression, nearly constant at a level in which a pedestrian is unlikely to be injured.

U. S. Patent No. 6,890,009 discloses a bumper core showing a F₂₀/F₄₀ ratio (a ratio of a compressive load F₂₀ at 20 % strain to a compressive load F₄₀ at 40 % strain) of 0.6 to 1.3 and a F₆₀/F₄₀ ratio (a ratio of a compressive load of F₆₀ at 60 % strain to a compressive load F₄₀ at 40 % strain) of 0.75-1.3. The known bumper core, thus, shows a compression curve in which the compressive load does not greatly increase until a 60 % strain is reached and, therefore, can contribute to protect pedestrians. In order to effectively protect pedestrians, however, it is desired that such a constant compressive load should continue in a wide range of strain.

JP 2004 360790 A describes a shock absorbing material structure for absorbing impact energy at the time of collision of an object. The energy absorbing structure comprises a plurality of vertical and horizontal ribs defining a plurality of partial cavities forming a "honeycomb" structure. The document neither discloses the outward buckling of ribs to increase the compressive load nor suggests a structure to facilitate outward buckling.

EP-A-1 393 985 discloses an elongated bumper core of a polyolefin-based resin-containing foam. The core comprises interconnecting sections connecting two legs to form an U-shaped structure.

A pumper absorber is also described in EP-A-1 564 079. The absorber is formed into a configuration having an upper rectangular closed-cross-sectional portion and a lower rectangular closed-cross-sectional portion which are connected by a front wall.

The present invention has been made in view of the problems of the conventional shock absorbing materials.

The problem of the invention is solved with the features of claim 1.

The present invention will be described in detail below with reference to the accompanying drawings, in which:
FIG. 1(a) is a perspective view diagrammatically illustrating one embodiment of a shock absorbing material according to the present invention;
FIG. 1(b) is a side view of FIG. 1(a);
FIG. 2 (a) is a perspective view diagrammatically illustrating another embodiment of a shock absorbing material according to the present invention;
FIG. 2(b) is a side view of FIG. 2(a);
FIG. 3(a) is a side view explanatory of a manner of the buckling of ribs when a shock absorbing material of the present invention is applied with a collision impact;
FIG. 3(b) is a side view explanatory of a manner of the buckling of ribs when a shock absorbing material of the present invention having a different construction is applied with a collision impact;
FIG. 3(c) is a side view explanatory of a manner of the buckling of ribs when a shock absorbing material of Comparative Examples 1 to 3 is applied with a collision impact;
FIG. 4(a) is an enlarged fragmentary view of a shock absorbing material of the present invention, showing an example of a configuration of a cut-away portion;
FIG. 4(b) is an enlarged fragmentary view of a shock absorbing material of the present invention, showing another example of a configuration of a cut-away portion;
FIG. 5 is a side view diagrammatically illustrating a further embodiment of a shock absorbing material according to the present invention;
FIG. 6 shows compression curves of a shock absorbing material of the present invention (curve "a") and a known shock absorbing material (curve "b");
FIG. 7(a) is a front elevational view schematically illustrating a compression test method;
FIG. 7(b) is a side view of FIG. 7(a);
FIG. 8 is a fragmentary vertical cross-sectional view schematically illustrating a bumper according to the present invention; and
FIG. 9 is a perspective view diagrammatically illustrating a shock absorbing material in the form of a bumper core according to a further embodiment of the present invention.

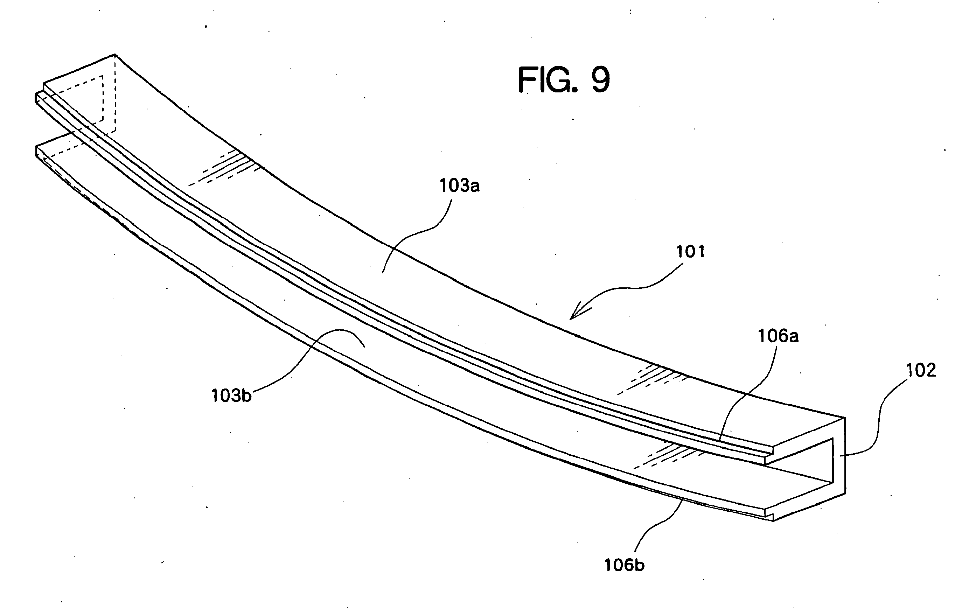

Referring first to FIG. 9, the reference numeral 101 designates an elongated shock absorbing material according to one preferred embodiment of the present invention. The shock absorbing material 101 has a base section 102 extending lengthwise of the shock absorbing material 101 and two, vertically spaced apart upper and lower ribs 103a and 103b extending in the lengthwise direction of the shock absorbing material and also forwardly from one surface of the base section 102. The upper and lower ribs 103a and 103b have cut-away or indented portions 106a and 106b, respectively, extending in the lengthwise direction of the shock absorbing material at outer side, distal ends thereof.

The shock absorbing material 101 is formed of a foam of a synthetic resin such as a polyolefin resin, a polystyrene resin, a polyester resin or a polycarbonate resin. For reasons of desired flexibility, excellent cushioning property and durability as well as high strengths, a polyolefin resin foam such as a polyethylene resin foam, a polypropylene resin foam or a styrene-modified polyethylene resin foam is preferred. The styrene-modified polyethylene resin preferably has a styrene component content of 40 to 70 % by weight, more preferably 50 to 70 % by weight.

The polyolefin resin may be, for example, a polypropylene resin such as a propylene homopolymer, a propylene-butene random copolymer, a propylene-butene block copolymer, a propylene-ethylene block copolymer, a propylene-ethylene random copolymer or a propylene-ethylene-butene random terpolymer; a polyethylene resin such as a low density polyethylene, a medium density polyethylene, a high density polyethylene, a linear low density polyethylene, a linear very low density polyethylene, a styrene-modified polyethylene resin, an ethylene-vinyl acetate copolymer, an ethylene-methyl methacrylate copolymer, an ionomer resin obtainable by inter-molecular crosslinking of an ethylene-methacrylic acid copolymer with a metal ion or an ethylene-acrylic acid-maleic anhydride terpolymer; polybutene-1; and polypentene. The polyolefin resin may contain at lest 30 % by weight, preferably at least 50 % by weight, of olefin components in the polymer chains thereof.

Among the above polyolefin resins, a polypropylene resin having a propylene component content of at least 30 % by weight, preferably at least 50 % by weight, more preferably at least 80 % by weight, is preferred for reasons of excellent rigidity. It is also preferred that the polypropylene resin have a tensile modulus of at least 900 MPa, more preferably at least 1,000 MPa, most preferably at least 1,050 MPa, because a light weight and high rigidity shock absorbing material can be obtained. The upper limit of the tensile modulus is generally about 3,000 MPa. Most propylene homopolymers have such a high tensile modulus. Propylene copolymers having a high propylene content may also have such a high tensile modulus. The term "tensile modulus" as used herein is as measured in accordance with the Japanese Industrial Standard JIS K 7161(1994) using a specimen of a 1A shape (molded directly by injection molding) specified in JIS K 7162(1994) at a testing rate of 1 mm/minute.

It is preferred that the shock absorbing material made of a synthetic resin foam, particularly a polypropylene resin foam, have an apparent density of 0.022 to 0.13 g/cm³, more preferably 0.03 to 0.10 g/cm³, still more preferably 0.04 to 0.09 g/cm³, for reasons of excellent compression characteristics. When a synthetic resin foam has an excessively high apparent density, a compressive load of its compression curve is so high that there is a possibility that an object with which the shock absorbing material is collided is seriously damaged. When a synthetic resin foam has an excessively low apparent density, it is necessary to increase the volume thereof in order to sufficiently absorb collision energy. The "apparent density" as used herein is obtained by dividing the weight thereof by the volume thereof. The volume is measured by an immersion method in which a specimen is immersed in water in a graduation cylinder to determine the rise in the water level.

The shock absorbing material of a synthetic resin foam may be prepared by a foam molding method in which expanded beads of the resin are heated and fuse-bonded in a mold. Such a foam molding method can easily produce a foamed molded article having a complicated shape, like the shock absorbing material of the present invention, and is preferred. The expanded beads may be prepared by any suitable known method. A shock absorbing material formed by molding polypropylene resin expanded beads has excellent rigidity, heat resistance and toughness and is suited for use as a shock absorbing article for automobiles, such as a bumper core. A shock absorbing material formed by molding styrene-modified polyethylene resin expanded beads may be also used as a shock absorbing article for automobiles. A foam molding obtained from styrene-modified polyethylene resin expanded beads is inferior in toughness but is superior in production costs as compared with that obtained from polypropylene resin expanded beads.

The elongated shock absorbing material 101, when used as a core of a bumper mounted on a front of a vehicle, extends laterally, namely in the direction normal to the front-to-rear direction (running direction of the vehicle). The bumper is generally curved from side-to-side of the vehicle and a front face of the bumper core (elongated shock absorbing material) 101 is also curved. For example, a front face of the bumper core 101 may be smoothly curved like a bow as shown in FIG. 9. In another example, the front face may be straight at its intermediate portion and has two bent or curved portions extending from opposite ends of the intermediate portion toward the two ends of the bumper core. The front face of the bumper core is generally designed in conformity with a shape of an inner surface of a fascia. Similarly, a rear face of the bumper core may be linear or curved and is generally designed in conformity with a shape of a beam. Thus, the shape of the bumper core is not essential. The configuration of the bumper core can be arbitrarily changed in correspondence to the configuration of the bumper to which the bumper core is to be installed.

A detailed structure of the elongated shock absorbing material of the present invention will now be described. For the sake of simplicity of illustration, the elongated shock absorbing material of the present invention will be generally described below as having a linear configuration.

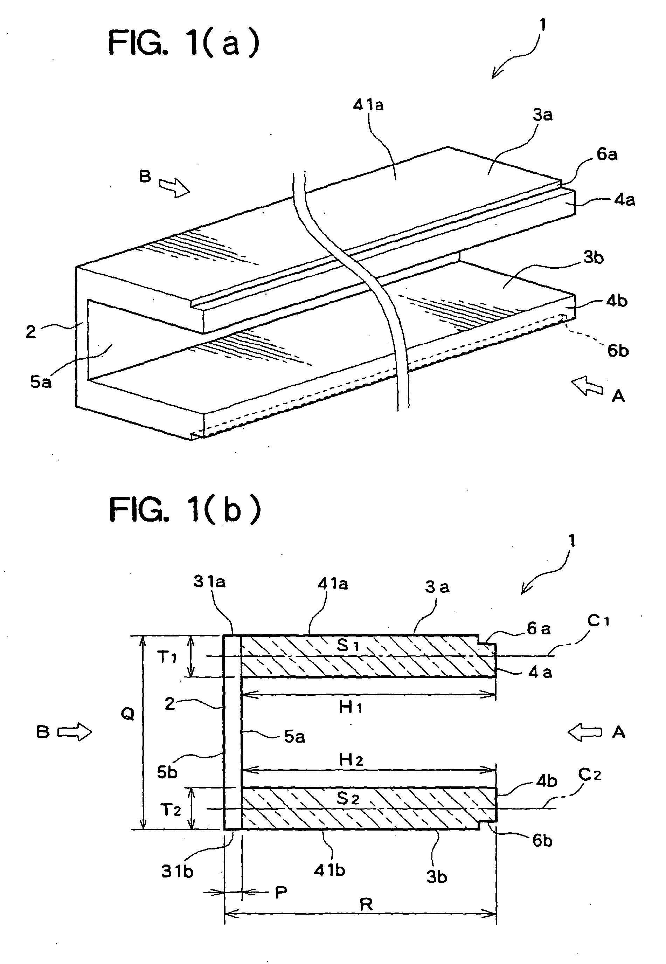

Referring now to FIGS. 1(a) and 1(b), designated generally as 1 is an elongated shock absorbing material having a base section 2 extending lengthwise of the shock absorbing material and having opposing front and rear surfaces 5a and 5b and opposing top and bottom faces 31a and 31b joining the front and rear surfaces 5a and 5b. Two, longitudinally extending, vertically spaced apart upper and lower ribs 3a and 3b extend forwardly from the front surface 5a of the base section 2. The upper and lower ribs 3a and 3b terminate in upper and lower free end faces 4a and 4b, respectively.

The upper and lower ribs 3a and 3b have top and bottom outer surfaces 41a and 41b, respectively. The top and bottom outer surfaces 41a and 41b meet the top and bottom faces 31a and 31b of the base section 2, respectively, so that the shock absorbing material 1 has generally a U-shaped cross-section as taken along a plane perpendicular to the lengthwise direction thereof (namely a plane parallel with a front-to-rear direction thereof). The shock absorbing material 1 is configured to absorb a collision energy applied in the direction of the arrow A or B in FIGS. 1(a) and 1(b), which is parallel with the front-to-rear direction thereof.

In the illustrated embodiment, the upper and lower ribs 3a and 3b are substantially in parallel with each other and extend substantially normal to the front and rear surfaces 5a and 5b. Such a configuration is not essential. The upper and lower ribs 3a and 3b can be non-parallel with each other, though the angle between the centerline C₁ of the upper rib 3a and the centerline C₂ of the lower rib 3b is preferably minus 20° to plus 20°, more preferably minus 10° to plus 10°. Further, each of the centerlines C₁ and C₂ of the upper and lower ribs 3a and 3b can be oriented at an angle of minus 5 ° to plus 15°, preferably 0° to 10°, relative to the front-to-rear direction of the shock absorbing material 1. The negative angle herein indicates that, in FIG. 1(b), the centerline C₁ of the upper rib 3a angles downward toward the distal free end thereof or the centerline C₂ of the lower rib 3b angles upward toward the distal free end thereof. Thus, when each of the centerlines C₁ and C₂ is oriented at a plus angle relative to the front-to-rear direction of the shock absorbing material 1, then the upper and lower ribs 3a and 3b diverge toward their distal free ends.

In order for the upper and lower ribs 3a and 3b to buckle and to sufficiently absorb collision energy while preventing a sharp increase of the compressive load at an initial stage of strain and an extreme decrease of the compressive load in a wide strain range (for example in a 20 to 75 % strain range), it is important that the upper rib 3a should have such a thickness T₁ (mm) in the vertical direction and a width H1 in the front-to-rear direction as to provide a ratio H₁/T₁ of 3 to 5, while said lower rib (3b) should have such a thickness T₂ (mm) in the vertical direction and a width H₂ in the front-to-rear direction as to provide a ratio H₂/T₂ of 3 to 5.

When the shock absorbing material 1 is used as a bumper core, each of the widths H₁ and H₂ is preferably 30-150 mm, more preferably 35-120 mm, while each of the thicknesses T₁ and T2 is preferably 8 to 50 mm, more preferably 10 to 30 mm. When the widths of the ribs 3a and 3b are in the above range, collision energy can be effectively absorbed without increasing the dimension of the bumper in the front-to-rear direction. When the thicknesses of the ribs 3a and 3b are in the above range, the bumper core has a high strength and can absorb collision energy for protecting pedestrians without increasing the compressive load upon collision. Each of the thicknesses T₁ and T₂ may be constant or may vary in the direction of the widths of the ribs 3a and 3b.

As used herein, "widths H₁ and H₂" of the ribs 3a and 3b are intended to refer to the lengths of the dimensions thereof from the front surface 5a from which they extend to their distal free end faces 4a and 4b, respectively. The thicknesses T₁ and T₂ may be constant or may vary in the direction of the widths of the ribs 3a and 3b. As used herein, "thicknesses T₁ and T₂" are as obtained by dividing the cross-sectional areas S₁ and S₂ (mm²) by the widths H₁ and H₂, respectively (T₁ = S₁/H₁ and T₂ = S₂/H₂). The cross-sectional areas S₁ and S₂ are areas of the hatched portions in FIG. 1(b).

When the shock absorbing material 1 is used as a bumper core, the maximum dimension R thereof in the front to rear direction, which is a total length of the widths H₁ or H₂ and a thickness P in the front to rear direction of base section 2, is preferably 30 to 160 mm, more preferably 40 to 130 mm, from the standpoint of satisfactory absorption of collision energy and compactness thereof.

The shock absorbing material 1 must satisfy at least one of the following conditions (A) and (C) and at least one of the following conditions (B) and (D):

(A) the upper rib (3a) has a first cut-away portion (6a) extending in the lengthwise direction and formed by cutting away a portion adjacent to and including an edge at which the top outer surface (41 a) and the upper free end face (4a) meet,

(B) the lower rib (3b) has a second cut-away portion (6b) extending in the lengthwise direction and formed by cutting way a portion adjacent to and including an edge at which the bottom outer surface (41b) and the lower free end face (4b) meet,

(C) the base section (2) has a third cut-away portion (7a) extending in the lengthwise direction and formed by cutting away a portion adjacent to and including an edge at which the rear surface (5b) and the top face (31 a) meet, and

(D) the base section (2) has a fourth cut-away portion (7b) extending in the lengthwise direction and formed by cutting away a portion adjacent to and including an edge at which the rear surface (5b) and the bottom face (31b) meet.

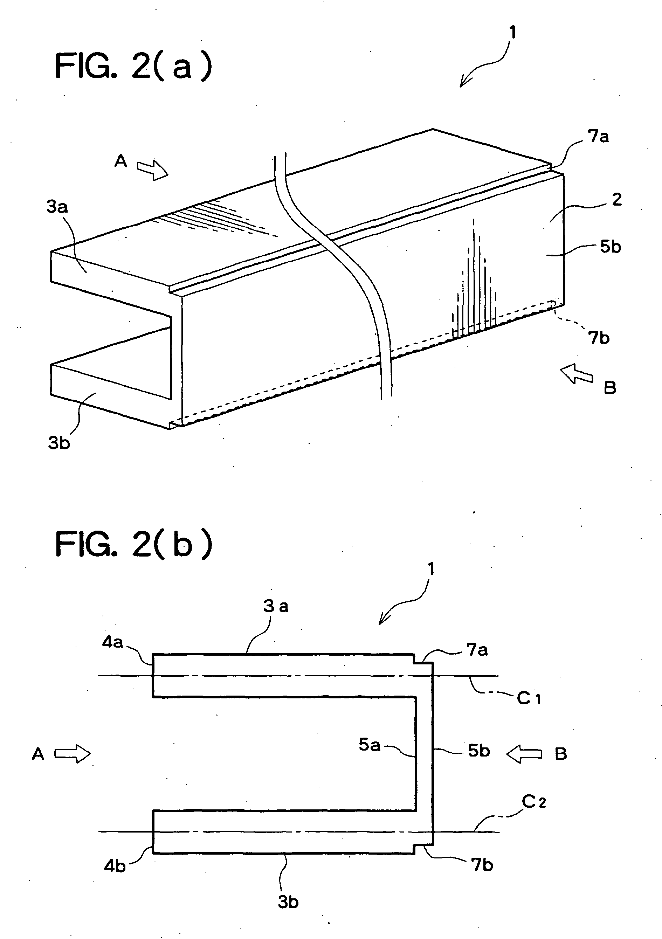

In the embodiment shown in FIGS. 1(a) and 1(b), both first and second cut-away portions 6a and 6b are formed. The embodiment shown in FIGS. 2(a) and 2(b) is the same as that in FIGS. 1(a) and 1(b) except that third and fourth cut-away portions 7a and 7b are formed instead of the first and second cut-away portions 6a and 6b. Thus, in FIGS. 2(a) and 2(b), component parts similar to those of FIGS. 1(a) and 1(b) are designated by the same reference numerals and detailed description thereof is not repeated here.

Generally and preferably, the shock absorbing material of the present invention is prepared by molding. In particular, foamed and expanded beads of a synthetic resin are filled in a mold cavity having a shape consistent with an external shape of a shock absorbing material to be produced and heated preferably with steam to fuse-bond the beads together, thereby obtaining the shock absorbing material in the form of a foamed molded article having desired cut-away portions. The first to fourth cut-away portions 6a, 6b, 7a and 7b may be thus preferably formed by molding at the time the foamed molded article is produced. If desired, however, such cut-away portions can be formed by milling after the foamed molded article has been produced.

A shock absorbing material satisfying at least one of the above conditions (A) and (C) and at least one of the above conditions (B) and (D) can show a compression curve in which the compressive load does not greatly increase or decrease in a wide strain range of about 25 to about 75 %.

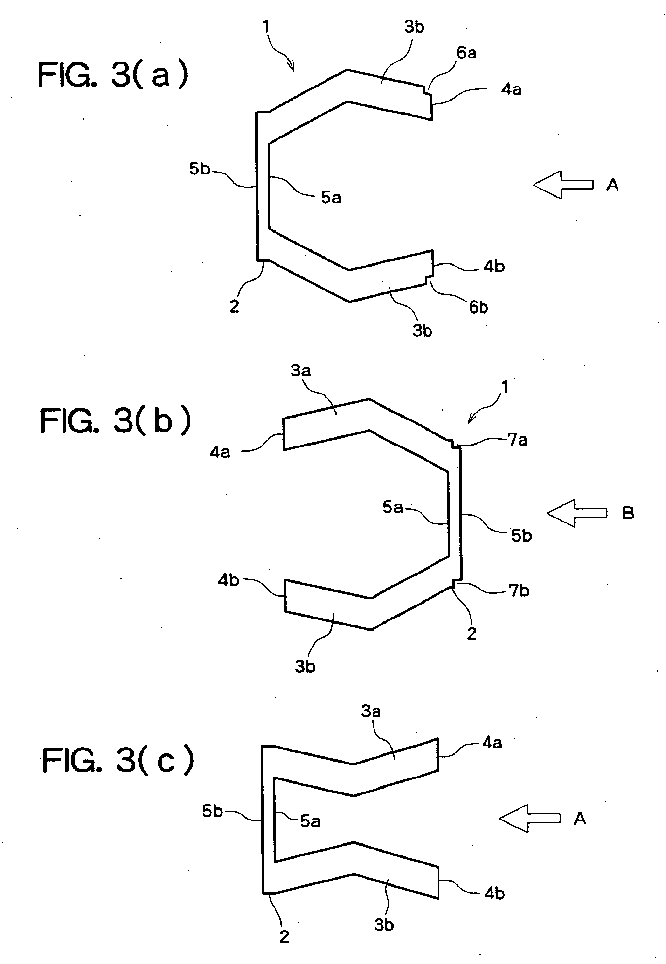

Referring to FIG. 3(a), when an impact is applied to the shock absorbing material 1 in the direction of the arrow A, the ribs 3a and 3b are buckled. In this case, it has been found that, because of the presence of the first and second cut-away portions 6a and 6b, the ribs 3a and 3b are warped and buckled outward. Thus, neither the upper rib 3a nor the lower rib 3b is stacked on the base section 2 and, therefore, the compressive load does not increase even when the ribs 3a and 3b undergo significant increases in strain.

Similarly, as shown in FIG. 3(b), when an impact is applied to the shock absorbing material 1 having cut-away portions 7a and 7b in the direction of the arrow B, the ribs 3a and 3b are warped and buckled outward so that the compressive load does not increase even when the ribs 3a and 3b undergo significant increases in strain.

On the other hand, when no such cut-away portions exist, as shown in FIG. 3(c), the ribs 3a and 3b are more likely to be warped and buckled inward. When inward buckling occurs, the upper and lower rib 3a and 3b are stacked on the base section 2 and, therefore, the compressive load increases when the ribs 3a and 3b undergo significant increases in strain.

When at least one of the above conditions (A) and (C) and at least one of the above conditions (B) and (D) are met, the above effect to prevent a significant increase or decrease in a strain range of about 25 to about 75 % can be attained. However, when the shock absorbing material is used such that collision impact is applied on a side of the distal end faces 4a and 4b, it is preferred that at least the above conditions (A) and (B) be met, as shown in FIG. 3(a).

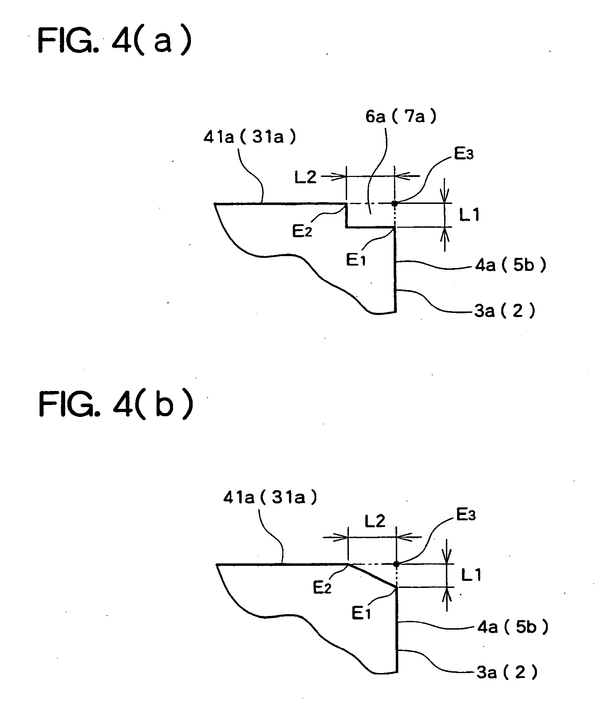

The configuration or shape of each of the first to fourth cut-away portions 6a, 6b, 7a and 7b is not specifically limited. Preferred configuration of cut-away portions will be described below with reference to FIGS. 4(a) and 4(b), in which only the first and third cut-away portions 6a and 7a are referred to for the sake of brevity. The following description of the configuration of the cut-away portions, therefore, also applies to the other cut-away portions 6b and 7b. The cut-away portion 6a (7a) is formed between the upper free end face 4a (rear surface 5b) and the top surface 41 a (top face 31 a) by cutting away an edge portion of the upper rib 3a (base section 2) at positions E₁ on the upper free end face 4a (rear surface 5b) and E₂ on the top surface 41 a (top face 31 a). The upper free end face 4a (rear surface 5b) and the top surface 41 a (top face 31 a) meet at an edge E₃. The cut-away portion 6a (7a) is preferably rectangular in cross-section as shown in FIG. 4(a) or triangular in cross-section as shown in FIG. 4(b), for reasons of easiness of fabrication of the shock absorbing material 1, but may have any desired shape.

The positions E₁ and E₂ are preferably such that a distance L1 between the edge E₃ and the position E₁ is 0.15×T₁ to 0.8 × T₁, more preferably 0.15×T₁ to 0.5×T₁, and a distance L2 between the edge E₃ and the position E₂ is 0.02xR to 0.6xR more preferably 0.03xR to 0.5xR, where T₁ is a thickness of the upper rib 3a as defined above and R is a width (in the front to rear direction) of shock absorbing material. The cut-away portion 6a (7a) preferably has a sectional area of preferably 0.01×R×T₁ to 0.2 ×R×T₁, more preferably 0.01×R×T₁ to 0.1 ×R×T₁. The distance L₁ is preferably 2 to 20 mm, more preferably 3 to 12 mm, still more preferably 3 to 8 mm, while the distance L₂ is preferably 2 to 50 mm, more preferably 3 to 30 mm, still more preferably 3 to 20 mm.

Each of the first to fourth cut-away portions 6a, 6b, 7a and 7b is preferably continuously formed in the lengthwise direction of the shock absorbing material 1. If desired, however, each cut-away portion may be intermittently formed in the lengthwise direction of the shock absorbing material 1 as long as the ribs 3a and 3b can be buckled outward when subjected to collision impact in the front-to-rear direction.

Each of the ribs 3a and 3b preferably has a deflection of at least 10 mm as measured in accordance with the bending test specified in JIS K7221-2(1999) since bending failure at a low load is prevented. In the bending test, a test piece having a length of 120 mm, a width of 25 mm and a thickness of 20 mm is cut out from the rib 3a or 3b such that no surfaces of the rib remain present in the test piece. The test piece is supported on two fulcrums which are spaced apart a distance of 100 mm and is pressed at a rate of 10 mm/minute.

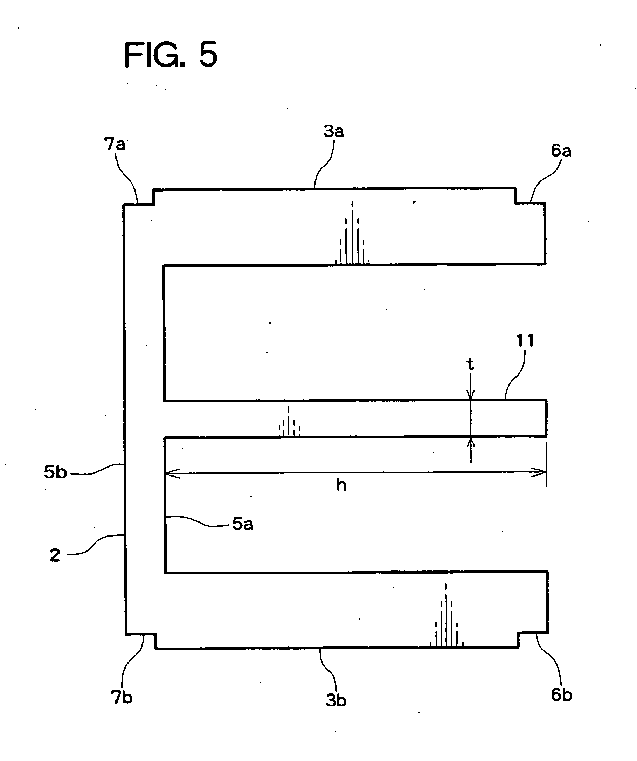

FIG. 5 depicts a further embodiment of the present invention in which component parts similar to those in FIGS. 1(b) and 2(b) are designated by the same reference numerals and detailed description thereof is not repeated here. In this embodiment, an auxiliary rib 11 is additionally provided between the upper and lower ribs 3a and 3b. The auxiliary rib 11 preferably has such a thickness t (mm) in the vertical direction and a width h in the front-to-rear direction as to provide a ratio h/t of 4 to 8. The h/t ratio is preferably greater than the H₁/T₁ and H₂/T₂ ratios of the upper and lower ribs 3a and 3b, since the resulting shock absorbing material can give a compression curve in which a stable constant compressive load region continues in a wide strain range. Additionally, the provision of such an auxiliary rib 11 permits a reduction of mechanical strengths of the ribs 3a and 3b and, therefore, a reduction of the apparent density of them.

The width h of the auxiliary rib 11 is preferably equal to or nearly equal to the width H₁ and/or H₂ of the ribs 3a and/or 3b, since the strengths of the shock absorbing material at an initial stage of the collision may be improved and since it is possible to effectively finely adjust the constant compressive load to the desired load range.

The thickness t of the auxiliary rib 11 is preferably less than the thicknesses T₁ and T₂ of the upper and lower ribs 3a and 3b and is more preferably less than 80 % of the thicknesses T₁ and T₂. In this case, the apparent density of the auxiliary rib 11 is preferably the same as that of the upper and lower ribs 3a and 3b. The thickness t of the auxiliary rib 11 is preferably 7 to 25 mm, more preferably 8 to 20 mm, still more preferably 10 to 20 mm. As used herein, the "thickness t" is as determined in the same manner as described above with reference to the thicknesses T₁ and T₂. The thickness of the auxiliary rib 11 may be uniform or non-uniform in the front-to-rear direction. If desired, two or more such auxiliary ribs may be provided.

As a consequence of the above-described structure, the shock absorbing material of present invention shows a compression curve in which the compressive load is nearly constant in a wide strain range of about 25 to about 75 % strain and is particularly suited for use as a bumper core for automobiles. Preferred shock absorbing characteristics of the shock absorbing material of the present invention will be described below.

The elongated shock absorbing material of the present invention, when subjected to a dynamic compression test using a rigid pipe having an outer diameter of 50 mm (impact speed of 20 km/hour), preferably gives a F₂₅/F₅₀ ratio of its compressive load F₂₅ at 25 % strain to its compressive load F₅₀ at 50 % strain of 0.75 to 1.30 and a F₇₅/F₅₀ ratio of its compressive load F₇₅ at 75 % strain to its compressive load F₅₀ at 50 % strain of 0.75 to 1.30. Each of the F₂₅/F₅₀ ratio and F₇₅/F₅₀ ratio is more preferably 0.80 to 1.20, still more preferably 0.85 to 1.10.

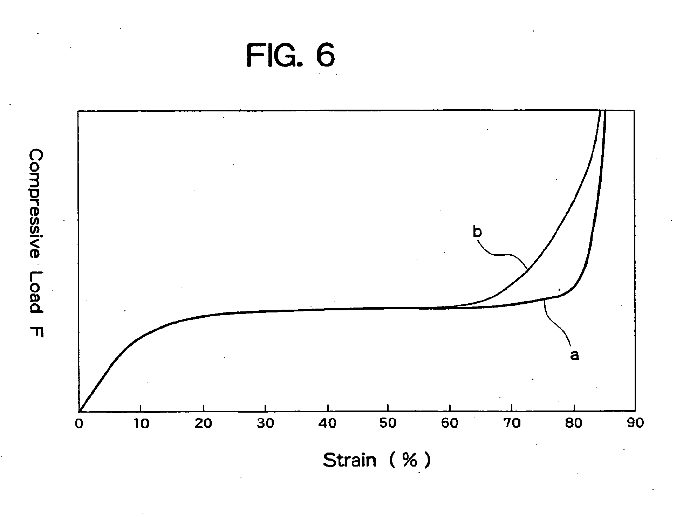

When the ratios F₂₅/F₅₀ and F₇₅/F₅₀ fall within the above ranges, the shock absorbing material typically shows a strain-stress curve "a" (shown in FIG. 6) in which the compressive load rapidly increases at an initial stage of collision (up to 10 % strain) and becomes nearly constant in a strain range of 25 to 75 %. Because of the presence of such a flat region in the compression curve "a" between the 25 % strain and the 75 % strain, the collision energy can be effectively absorbed in the flat region. Further, the compressive loads in the flat region do not greatly exceed the compressive load F₅₀ at the 50 % strain.

When the ratio F₂₅/F₅₀ is at least 0.75, the compressive load increases at an initial stage of collision and, therefore, collision energy can be sufficiently absorbed in a low strain range. When the ratio F₂₅/F₅₀ is no more than 1.30, an object, such as a pedestrian's leg, with which the shock absorbing material is collided is not damaged and can be effectively protected in a low strain range. When the ratio F₇₅/F₅₀ is at least 0.75, the compressive load does not decrease in the strain of 50 % or more and, therefore, the collision impact can be sufficiently absorbed in a high strain range. When the ratio F₇₅/F₅₀ is not greater than 1.30, the full width of the shock absorbing material in the front-to-rear direction can be utilized as an effective stroke for absorbing the collision energy. For reasons of sufficient protection of pedestrians and sufficient absorption of the collision energy, it is further preferred that a F₈₀/F₅₀ratio of the compressive load F₈₀ at 80 % strain to the compressive load F₅₀ at 50 % strain be 1.3 or less. In FIG. 6, the curve "b" represents a compression curve of a known shock absorbing material having no cut-away portions.

When the shock absorbing material is used as a bumper core, it is preferred that the compressive load F₅₀ at the 50 % strain be in the range of 2-9 kN, more preferably 2-5 kN, for reasons of sufficient absorption of the collision energy and sufficient protection of a pedestrian's leg from the collision impact. For the same reasons, the compressive load F₂₅ at the 25 % strain is preferably in the range of 2 to 9 kN, more preferably 2 to 5 kN, while the compressive load F₇₅ at the 75 % strain is preferably in the range of 2 to 9 kN, more preferably 2 to 5 kN.

As used herein, the compression curve is intended to refer to plots of the compressive load as a function of the strain obtained in a dynamic compression test (weight-drop test) in which a rigid pipe as an impactor having an outer diameter of 50 mm is allowed to free fall on a test sample at an impact speed of 20 km/hour. The impact speed is adjusted at 20 km/hour by adjustment of the drop height. The compression test is carried out at 23°C under a relative humidity of 50 %.

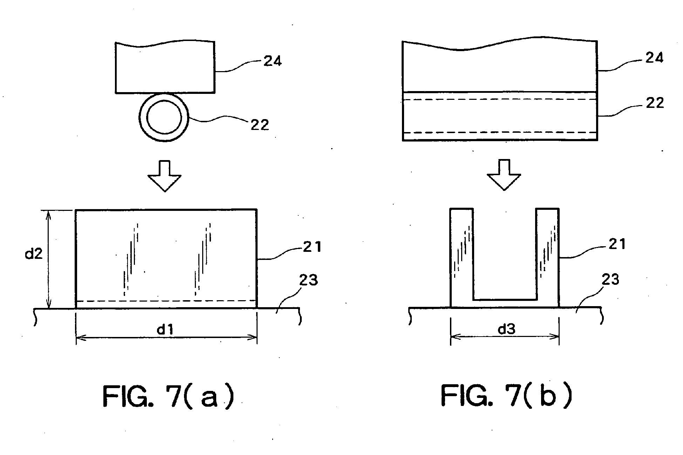

The compression test method will be described below with reference to FIGS. 7(a) and 7(b) which are front and side views, respectively, schematically illustrating a test sample 21 under the compression test. The test sample 21 is obtained by laterally cutting an elongated shock absorbing material into a length "d1" of at least 25 cm. Thus, the test sample 21 has a length "d1" in the lengthwise direction of at least 25 cm, a width "d2" which equals the width of the shock absorbing material in the front-to-rear direction, and a height "d3" which equals the height of the shock absorbing material in the vertical direction.

The test sample 21 is placed on a rigid supporting table 23 with its free end faces facing upward (as shown in FIG. 7(b)) or with its rear surface facing upward (not shown). Then, a rigid pipe 22 is allowed to free fall on the sample 21 such that the axial direction of the pipe 22 is perpendicular to the lengthwise direction of the sample 21. Designated as 24 is an impacting device to which the pipe 22 is fixed. The compression test is conducted while recording deceleration and displacement to obtain plots of the compressive load as a function of the strain. From the thus obtained compression curve, F₂₅, F₅₀, F₇₅ and F₈₀ are determined, from which F₂₅/F₅₀, F₇₀/F₅₀ and F₈₀/F₅₀ are calculated. Electric noises in the measurement of deceleration and displacement are treated using a low pass filter which is suitably selected so as to avoid extreme changes of deceleration and displacement. The load is calculated on the basis of the deceleration and impactor weight while taking gravity into account.

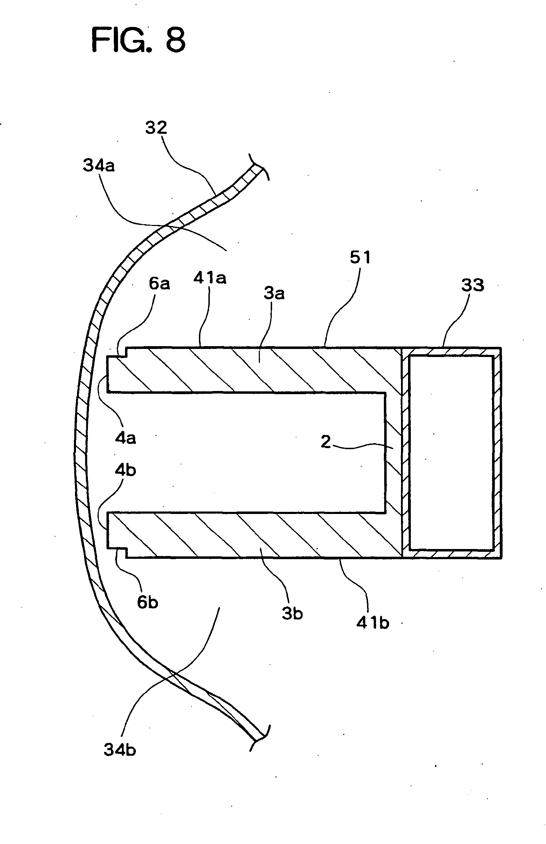

FIG. 8 schematically depicts a vehicle bumper using the shock absorbing material of FIGS. 1(a) and 1(b) as a bumper core 51. The bumper has a bumper fascia 32 and a reinforcement 33 such as a beam. The bumper core 51 is disposed between the fascia 32 and the reinforcement 33 with the front-to-rear direction thereof in parallel with a running direction of the vehicle. In the preferred embodiment shown in FIG. 8, the free end faces 4a and 4b face the fascia 32. The height of the bumper core 51 is preferably substantially the same as the height of the bumper beam 33.

The fascia 32 is preferably shaped so that spaces 34a and 34b are defined between an inside periphery of the fascia 32 and the top and bottom outer surfaces 41 a and 41 b of the upper and lower ribs 3a and 3b, respectively, to receive parts of the upper and lower ribs 3a and 3b buckled when the shock absorbing material is subjected to an external impact in the front to rear direction.

The shock absorbing material of the present invention is particularly suited for use as a collision energy absorbing material provided in a bumper, a ceiling, a door, etc for automobiles.

The following examples will further illustrate the present invention.

### Example 1

Expanded beads (apparent density: 0.16 g/cm³) of a polypropylene resin (propylene-ethylene random copolymer) having a tensile modulus of 1,120 MPa were filled in a mold and heated with steam to obtain a foamed molded article (a shock absorbing material) having an apparent density of 0.113 g/cm³ and a structure as shown in FIGS. 1(a) and 1(b). The dimension of the shock absorbing material was as follows (also shown in Table 1):
Thickness P (in the front to rear direction) of base section: 8 mm
Height Q (in the vertical direction) of base section (height of the shock absorbing material): 80 mm
Width H (in the front to rear direction) of each rib: 87 mm
Thickness T (in the vertical direction) of each rib: 20.5 mm (21 mm at the proximate end and 20 mm near the distal end)
Width R (in the front to rear direction) of shock absorbing material: 95 mm
Height L1 (in the vertical direction) of rectangular first and second cut-away portions (6a and 6b): 5 mm
Width L2 (in the front to rear direction) of rectangular first and second cut-away portions (6a and 6b): 10 mm

### Example 2

Expanded beads (apparent density: 0.16 g/cm³) of a polypropylene resin (ethylene-propylene random copolymer) having a tensile modulus of 1,120 MPa were filled in a mold and heated with steam to obtain a shock absorbing material having an apparent density of 0.113 g/cm³ and a structure as shown in FIGS. 1(a) and 1(b). The dimension of the shock absorbing material was as follows (also shown in Table 1):
Thickness P of base section: 8 mm
Height Q of base section: 80 mm
Width H of each rib: 87 mm
Thickness T of each rib: 20.5 mm (21 mm at the proximate end and 20 mm near the distal end)
Width R of shock absorbing material: 95 mm
Height L1 of rectangular first and second cut-away portions (6a and 6b): 5 mm
Width L2 of rectangular first and second cut-away portions (6a and 6b): 15 mm

### Example 3

Expanded beads (apparent density: 0.12 g/cm³) of a polypropylene resin (ethylene-propylene random copolymer) having a tensile modulus of 1,120 MPa were filled in a mold and heated with steam to obtain a shock absorbing material having an apparent density of 0.082 g/cm³ and a structure as shown in FIGS. 1(a) and 1(b). The dimension of the shock absorbing material was as follows (also shown in Table 1):
Thickness P of base section: 12 mm
Height Q of base section: 100 mm
Wdth H of each rib: 83 mm
Thickness T of each rib: 19.5 mm (20 mm at the proximate end and 19 mm near the distal end)
Width R of shock absorbing material: 95 mm
Height L1 of rectangular first and second cut-away portions (6a and 6b): 5 mm
Width L2 of rectangular first and second cut-away portions (6a and 6b): 10 mm

### Example 4

Expanded beads (apparent density: 0.076 g/cm³) of a polypropylene resin (ethylene-propylene random copolymer) having a tensile modulus of 1,120 MPa were filled in a mold and heated with steam to obtain a foamed molded article in the form of a shock absorbing material having an apparent density of 0.060 g/cm³ and a structure as shown in FIG. 5. The mold had a structure so that an auxiliary rib was provided between upper and lower ribs. The dimension of the shock absorbing material was as follows (also shown in Table 1):
Thickness P of base section: 12 mm
Height Q of base section: 100 mm
Width H of each rib: 83 mm
Thickness T of each rib: 19.5 mm (20 mm at the proximate end and 19 mm near the distal end)
Width R of shock absorbing material: 95 mm
Width h of auxiliary rib: 83 mm
Thickness t of auxiliary rib: 15 mm (16 mm at the proximate end and 14 mm near the distal end)
Height L1 of rectangular first and second cut-away portions (6a and 6b): 5 mm
Width L2 of rectangular first and second cut-away portions (6a and 6b): 10 mm

### Example 5

Example 3 was repeated to obtain a similar foamed molded article in the form of a shock absorbing material having an apparent density of 0.082 g/cm³ and a structure as shown in FIGS. 1(a) and 1(b). The dimension of the shock absorbing material was the same as that of the shock absorbing material of Example 3 (also shown in Table 1).

### Example 6

Expanded beads (apparent density: 0.26 g/cm³) of a polypropylene resin (ethylene-propylene random copolymer) having a tensile modulus of 1,120 MPa were filled in a mold and heated with steam to obtain a foamed molded article in the form of a shock absorbing material having an apparent density of 0.18 g/cm³ and a structure as shown in FIGS. 1(a) and 1(b). The dimension of the shock absorbing material was as follows (also shown in Table 1):
Thickness P of base section: 12 mm
Height Q of base section: 80 mm
Width H of each rib: 83 mm
Thickness T of each rib: 22 mm (23 mm at the proximate end and 21 mm near the distal end)
Width R of shock absorbing material: 95 mm
Height L1 of rectangular first and second cut-away portions (6a and 6b): 5 mm
Width L2 of rectangular first and second cut-away portions (6a and 6b): 10 mm

### Example 7

Expanded beads (apparent density: 0.029 g/cm³) of a polypropylene resin (ethylene-propylene random copolymer) having a tensile modulus of 1,120 MPa were filled in a mold and heated with steam to obtain a foamed molded article in the form of a shock absorbing material having an apparent density of 0.020 g/cm³ and a structure as shown in FIGS. 1(a) and 1(b). The dimension of the shock absorbing material was as follows (also shown in Table 1):
Thickness P of base section: 12 mm
Height Q of base section: 80 mm
Width H of each rib: 83 mm
Thickness T of each rib: 19.5 mm (20 mm at the proximate end and 19 mm near the distal end)
Width R of shock absorbing material: 95 mm
Height L1 of rectangular first and second cut-away portions (6a and 6b): 5 mm
Width L2 of rectangular first and second cut-away portions (6a and 6b): 10 mm

### Example 8

Example 3 was repeated in the same manner as described except that the mold having a different structure was used, so that the first and second cut-away portions were not formed but, instead, third and fourth cut-away portions (7a and 7b) as shown in FIGS. 2(a) and 2(b) were formed at edges of top and bottom faces of the base section. The height L1 and width L2 of each of the third and fourth cut-away portions were 5 mm and 10 mm, respectively. Except the above points, the shock absorbing material of Example 8 had the same dimension and structure as those of Example 3

### Example 9

Example 3 was repeated in the same manner as described except that the mold having a different structure was used, so that the thickness T of each rib was 20.5 mm (21 mm at the proximate end and 20 mm near the distal end). Except the above points, the shock absorbing material of Example 9 had the same dimension and structure as those of Example 3.

### Example 10

Expanded beads (apparent density: 0.094 g/cm³) of a styrene-modified polyethylene resin (polyethylene-styrene graft copolymer (styrene component content: 60 % by weight) were filled in a mold and heated with steam to obtain a foamed molded article in the form of a shock absorbing material having an apparent density of 0.067 g/cm³ and a structure as shown in FIGS. 1(a) and 1(b). The dimension of the shock absorbing material was the same as that of Example 3 (also shown in Table 1):

### Comparative Examples 1 and 2

Expanded beads (apparent density: 0.16 g/cm³) of a propylene resin (ethylene-propylene random copolymer) having a tensile modulus of 1,120 MPa were filled in a mold and heated with steam to obtain a foamed molded article in the form of a shock absorbing material having an apparent density of 0.113 g/cm³. The shock absorbing material had the same structure as shown in FIGS. 1(a) and 1(b) except that neither the first cut-away portion 6a nor the second cut-away portion 6b was formed. The dimension of the shock absorbing material was as follows (also shown in Table 1'):
Thickness P (in the front to rear direction) of base section: 8 mm
Height Q (in the vertical direction) of base section: 80 mm
Width H (in the front to rear direction) of each rib: 87 mm
Thickness T (in the vertical direction) of each rib: 20.5 mm (21 mm at the proximate end and 20 mm near the distal end)
Width R (in the front to rear direction) of shock absorbing material: 95 mm

### Comparative Example 3

Expanded beads (apparent density: 0.16 g/cm³) of a propylene resin (ethylene-propylene random copolymer) having a tensile modulus of 1,120 MPa were filled in a mold and heated with steam to obtain a foamed molded article in the form of a shock absorbing material having an apparent density of 0.113 g/cm³. The shock absorbing material had the same structure as shown in FIGS. 1(a) and 1(b) except that neither the first cut-away portion (6a) nor the second cut-away portion (6b) was formed. The dimension of the shock absorbing material was as follows (also shown in Table 1):
Thickness P (in the front to rear direction) of base section: 8 mm
Height Q (in the vertical direction) of base section: 80 mm
Width H (in the front to rear direction) of each rib: 87 mm
Thickness T (in the vertical direction) of each rib: 15.5 mm (16 mm at the proximate end and 15 mm near the distal end)
Width R (in the front to rear direction) of shock absorbing material: 95 mm

### Comparative Example 4

Expanded beads (apparent density: 0.16 g/cm³) of a propylene resin (ethylene-propylene random copolymer) having a tensile modulus of 1,120 MPa were filled in a mold and heated with steam to obtain a foamed molded article in the form of a shock absorbing material having an apparent density of 0.113 g/cm³. The shock absorbing material had the same structure as shown in FIGS. 1(a) and 1(b) except that neither the first cut-away portion (6a) nor the second cut-away portion (6b) was formed but, instead, inner rectangular cut-away portions each extending in the longitudinal direction were formed at inner sides of the ribs. Namely, one of the inner cut-away portion was formed by cutting away a portion adjacent to and including an edge at which an inner surface opposite the top outer surface (41a) and the upper free end face (4a) met, while the other cut-away portion was formed by cutting away a portion adjacent to and including an edge at which an inner surface opposite the bottom outer surface (41b) and the lower free end face (4b) met. The dimension of the shock absorbing material was as follows (also shown in Table 1):
Thickness P (in the front to rear direction) of base section: 8 mm
Height Q (in the vertical direction) of base section: 80 mm
Width H (in the front to rear direction) of each rib: 87 mm
Thickness T (in the vertical direction) of each rib: 20.5 mm (21 mm at the proximate end and 20 mm near the distal end)
Width R (in the front to rear direction) of shock absorbing material: 95 mm
Height (in the vertical direction) of inner cut-away portions: 5 mm
Width (in the front to rear direction) of inner cut-away portions: 10 mm

### Comparative Example 5

Expanded beads (apparent density: 0.12 g/cm³) of a propylene resin (ethylene-propylene random copolymer) having a tensile modulus of 1,120 MPa were filled in a mold and heated with steam to obtain a foamed molded article in the form of a shock absorbing material having an apparent density of 0.082 g/cm³ and a structure as shown in FIGS. 1(a) and 1(b). The dimension of the shock absorbing material was as follows (also shown in Table 1):
Thickness P (in the front to rear direction) of base section: 12 mm
Height Q (in the vertical direction) of base section: 80 mm
Width H (in the front to rear direction) of each rib: 83 mm
Thickness T (in the vertical direction) of each rib: 29.5 mm (30 mm at the proximate end and 29 mm near the distal end)
Width R (in the front to rear direction) of shock absorbing material: 95 mm
Height L1 of rectangular first and second cut-away portions (6a and 6b): 5 mm
Width L2 of rectangular first and second cut-away portions (6a and 6b): 10 mm

**Table 1**

| | Expanded beads | Foamed molded article | Upper and lower ribs | | | Rectangular cut-away portions | |
|---|---|---|---|---|---|---|---|
| | Apparent density (g/cm³) | Apparent density (g/cm³) | Width H (mm) | Thickness T (mm) | H/T | Location | Dimension L₁×L₂ (mm) |
| Example 1 | 0.16 | 0.113 | 87 | 20.5 | 4.2 | outer side, distal ends of ribs (6a, 6b) | 5×10 |
| Example 2 | 0.16 | 0.113 | 87 | 20.5 | 4.2 | outer side, distal ends of ribs (6a, 6b) | 5×15 |
| Example 3 | 0.12 | 0.082 | 83 | 19.5 | 4.3 | outer side, distal ends of ribs (6a, 6b) | 5×10 |
| Example 4 *1 | 0.076 | 0.060 | 83 | 19.5 | 4.3 | outer side, distal ends of ribs (6a, 6b) | 5×10 |
| Example 5 | 0.12 | 0.082 | 83 | 19.5 | 4.3 | outer side, distal ends of ribs (6a, 6b) | 5×10 |
| Example 6 | 0.26 | 0.18 | 83 | 22 | 3.8 | outer side, distal ends of ribs (6a, 6b) | 5×10 |
| Example 7 | 0.029 | 0.020 | 83 | 19.5 | 4.3 | outer side, distal ends of ribs (6a, 6b) | 5×10 |
| Example 8 | 0.12 | 0.082 | 83 | 19.5 | 4.3 | edges of top and bottom faces of base section (7a, 7b) | 5×10 |
| Example 9 | 0.12 | 0.082 | 83 | 20.5 | 4.0 | outer side, distal ends of ribs (6a, 6b) | 5×10 |
| Example 10 | 0.094 | 0.067 | 83 | 19.5 | 4.3 | outer side, distal ends of ribs (6a, 6b) | 5×10 |
| Comparative Example 1 | 0.16 | 0.113 | 87 | 20.5 | 4.2 | none | - |
| Comparative Example 2 | 0.16 | 0.113 | 87 | 20.5 | 4.2 | none | - |
| Comparative Example 3 | 0.16 | 0.113 | 87 | 15.5 | 5.6 | none | - |
| Comparative Example 4 | 0.16 | 0.113 | 87 | 20.5 | 4.2 | inner side, distal ends of ribs | 5×10 |
| Comparative Example 5 | 0.12 | 0.082 | 83 | 29.5 | 2.8 | outer side, distal ends of ribs (6a, 6b) | 5×10 |

| | | | | | | | |
|---|---|---|---|---|---|---|---|
| *1: An auxiliary rib is additionally provided between upper and lower ribs | | | | | | | |

From the essential portion of the thus obtained shock absorbing materials of Examples 1-10 and Comparative Examples 1-5 were cut out test samples 21 as shown in FIGS. 7(a) and 7(b) each having a length of the dimension "d1" of 290 mm, a length of the dimension "d2" which was equal to the width R of the shock absorbing material and a length of the dimension "d3" which was equal to the height Q of the shock absorbing material. Each sample was subjected to a dynamic compression test in a manner as described previously using an impactor in the form of a pipe to determine a buckling direction and to measure a compressive load F₂₅ at 25 % strain, a compressive load F₅₀ at 50 % strain, a compressive load F₇₅ at 75 % strain, a compressive load F₈₀ at 80 % strain, from which F₂₅/F₅₀, F₇₅/F₅₀ and F₈₀/F₅₀ were calculated. The dynamic compression test was carried out using a commercially available tester (Drop Impact Tester CST-320D; manufactured by Yoshida Seiki Co., Ltd.; tester specifications: maximum drop height of 2 m, maximum impactor weight: 64 kg) and a digital (low pass) filter for data analysis (specifications: CFC180, 600 and 1000; CFC600 was used in the present Examples and Comparative Examples).

In Examples 1 to 7 and 10 and Comparative Examples 2 to 5, the compression test was carried out with the free end faces of the ribs facing upward as an impact receiving surface. In Examples 8 and 9 and Comparative Example 1, on the other hand, the compression test was carried out with the rear surface of the base section facing upward as an impact receiving surface. In all Examples and Comparative Examples except Example 5, the stand 23 used had a width greater than the dimension "d3" in the vertical direction of the shock absorbing material, as shown in FIG. 7(b). In Example 5, however, the stand 23 used had a width equal to the dimension "d3" of the shock absorbing material. Because of this difference, an increase of the compressive load in a range of 75 to 80 % strain in the shock absorbing material of Example 5 is slower than that of Example 3.

Also measured were the maximum bending load BL and maximum bending stress BS of ribs in accordance with JIS K 7221-2(1999). The results of the above measurements are summarized in Table 2.

**Table 2**

| | BL (N) | BS (mm) | Width of stand (mm) | d3 of sample (mm) | Impact receiving surface | F₂₅ (kN) | F₅₀ (kN) | F₇₅ (kN) | F₂₅/F₅₀ | F₇₅/F₅₀ | F₈₀ (kN) | F₈₀/F₅₀ | Buckling direction |
|---|---|---|---|---|---|---|---|---|---|---|---|---|---|
| Example 1 | 120 | 16 | 150 | 80 | rib-side | 5.0 | 5.4 | 5.5 | 0.93 | 1.02 | 6.5 | 1.18 | outward |
| Example 2 | 120 | 16 | 150 | 80 | rib-side | 5.1 | 6.5 | 7.2 | 0.78 | 1.11 | 8.4 | 1.29 | outward |
| Example 3 | 90 | 21 | 150 | 80 | rib-side | 3.2 | 3.8 | 3.4 | 0.84 | 0.89 | 3.6 | 0.95 | outward |
| Example 4 | 60 | 22 | 150 | 100 | rib-side | 3.0 | 2.8 | 3.5 | 1.07 | 1.25 | 4.0 | 1.42 | outward |
| Example 5 | 90 | 21 | 80 | 80 | rib-side | 3.0 | 3.5 | 3.2 | 0.86 | 0.91 | 3.2 | 0.91 | outward |
| Example 6 | 170 | 11 | 150 | 80 | rib-side | 9.1 | 9.9 | 8.8 | 0.92 | 0.89 | 12.7 | 1.28 | outward |
| Example 7 | 12 | 30 | 150 | 80 | rib-side | 0.94 | 1.03 | 1.06 | 0.91 | 1.03 | 1.28 | 1.24 | outward |
| Example 8 | 90 | 21 | 150 | 80 | base-side | 3.0 | 3.9 | 4.1 | 0.77 | 1.05 | 4.7 | 1.21 | outward |
| Example 9 | 90 | 21 | 150 | 80 | base-side | 3.3 | 3.8 | 3.5 | 0.87 | 0.92 | 4.5 | 1.18 | outward |
| Example 10 | 70 | 18 | 150 | 80 | rib-side | 6.3 | 8.0 | 9.7 | 0.88 | 1.03 | 9.7 | 1.22 | outward |
| Com. Ex. 1 | 120 | 16 | 150 | 80 | base-side | 6.3 | 8.0 | 9.7 | 0.79 | 1.21 | 12.2 | 1.53 | inward |
| Com. Ex. 2 | 120 | 16 | 150 | 80 | rib-side | 6.4 | 8.0 | 8.0 | 0.80 | 1.00 | 11.8 | 1.48 | inward |
| Com. Ex. 3 | 120 | 16 | 150 | 80 | rib-side | 4.0 | 1.0 | 1.5 | 4.00 | 1.50 | 2.6 | 2.60 | inward |
| Com. Ex. 4 | 120 | 16 | 150 | 80 | rib-side | 5.1 | 7.2 | 1.03 | 0.71 | 1.43 | 11.7 | 1.63 | inward |
| Com. Ex. 5 | 90 | 21 | 150 | 80 | rib-side | 4.6 | 7.0 | 12.0 | 0.65 | 1.71 | 15.4 | 2.20 | outward |

## Claims

1. A bumper for attachment to a vehicle, comprising
a bumper fascia (32),
a reinforcement (33), and
an elongated shock absorbing structure of a synthetic resin foam disposed between said fascia (32) and said reinforcement (33) with the front to rear direction thereof in parallel with a running direction of said vehicle,
said shock absorbing structure comprising:
a base section (2) extending lengthwise of said shock absorbing material and having opposing front and rear surfaces (5a, 5b) and opposing top and bottom faces (31a, 31b) joining said front and rear surfaces (5a, 5b), and
two, longitudinally extending, vertically spaced apart upper and lower ribs (3a, 3b) extending forwardly from said front surface (5a) of said base section (2) and terminating in upper and lower free end faces (4a, 4b), respectively, said upper and lower ribs (3a, 3b) having top and bottom outer surfaces (41a, 41b), respectively, said top and bottom outer surfaces (41a, 41b) meeting said top and bottom faces (31a, 31b) of said base section (2), respectively, so that said shock absorbing material has a U-shaped cross-section as taken along a plane perpendicular to the longitudinal direction,
wherein said upper rib (3a) has such a thickness T₁ (mm) in the vertical direction and a width H₁ in a front-to-rear direction which is perpendicular to the lengthwise direction of said shock absorbing material as to provide a ratio H₁/T₁ of 3 to 5, while said lower rib (3b) has such a thickness T₂ (mm) in the vertical direction and a width H₂ in the front-to-rear direction as to provide a ratio H₂/T₂ of 3 to 5, and
wherein said shock absorbing structure satisfies at least one of the following conditions (A) and (C) and at least one of the following conditions (B) and (D):
(A) said upper rib (3a) has a first cut-away portion (6a) extending in the lengthwise direction and formed by cutting away a portion adjacent to and including an edge at which said top outer surface (41a) and said upper free end face (4a) meet,
(B) said lower rib (3b) has a second cut-away portion (6b) extending in the lengthwise direction and formed by cutting way a portion adjacent to and inducting an edge at which said bottom outer surface (41b) and said lower free end face (4b) meet,
(C) said base section (2) has a third cut-away portion (7a) extending in the lengthwise direction and formed by cutting away a portion adjacent to and including an edge at which said rear surface (5b) and said top face (31 a) meet, and
(D) said base section (2) has a fourth cut-away portion (7b) extending in the lengthwise direction and formed by cutting away a portion adjacent to and including an edge at which said rear surface (5b) and said bottom face (31b) meet,
said fascia (32) being shaped so that spaces (34a, 34b) are defined between an inside periphery of said fascia (32) and said top and bottom outer surfaces of said upper and lower ribs (3a, 3b) to receive parts of said upper and lower ribs buckled when the shock absorbing construction (51) is subjected to an external impact in the front to rear direction,
wherein the shock absorbing structure (51) is disposed between said fascia (32) and said reinforcement (33) with the upper and lower free end faces (4a, 4b) of said upper and lower ribs (3a, 3b) facing said fascia (32).

2. A bumper as recited in claim 1, wherein said synthetic resin foam is a foamed molded article of expanded thermoplastic resin beads.

3. A bumper as recited in claim 2, wherein said expanded thermoplastic resin beads are expanded polyolefin resin beads.

4. A bumper as recited in claim 2, wherein said foamed molded article has an apparent density of 0.022 to 0.13 g/cm³.

5. A bumper as recited in claim 1, further comprising an auxiliary rib (11) provided between said upper and lower ribs (3a, 3b) and extending forwardly from said front surface of said base section (2).

6. A bumper as recited in claim 1, wherein the upper and lower ribs (3a, 3b) diverge toward said free ends such that centerlines (C₁ and C₂) of the upper and lower ribs (3a, 3b) are oriented at an angle of up to 10° from perpendicular to said front surface (5a).

## Patentansprüche

1. Stoßdämpfer zur Befestigung an einem Fahrzeug, mit
einer Stoßdämpferverkleidung (32),
einer Verstärkung (33), und
einer länglichen stoßabsorbierenden Struktur aus einem synthetischen Harzschaum, die zwischen der Verkleidung (32) und der Verstärkung (33) angeordnet ist, wobei die von vorne nach hinten verlaufende Richtung davon parallel zu einer Laufrichtung des Fahrzeugs ist,
wobei die stoßabsorbierende Struktur umfasst:
einen Basisbereich (2), der sich der Länge nach von dem stoßabsorbierenden Material erstreckt und gegenüberliegende vordere und hintere Oberflächen (5a, 5b) und gegenüberliegende obere und untere Flächen (31a, 31b) die die vorderen und hinteren Oberflächen (5a, 5b) verbinden, aufweist, und
zwei, sich longitudinal erstreckende, vertikal voneinander beabstandete, höhere und niedrigere Rippen (3a, 3b), die sich nach vorne von der vorderen Oberfläche (5a) des Basisbereichs (2) erstrecken und in höhere bzw. niedrigere freie Endflächen (4a, 4b) enden,
wobei die höheren und niedrigeren Rippen (3a, 3b) obere bzw. untere äußere Oberflächen (41a, 41b) aufweisen, wobei die oberen und unteren äußeren Oberflächen (41a, 41b) die oberen bzw. unteren Flächen (31a, 31b) des Basisbereichs (2) treffen, sodass das stoßabsorbierende Material einen U-förmigen Querschnitt längs einer Ebene senkrecht zu der longitudinalen Richtung aufweist,
wobei die obere Rippe (3a) eine derartige Dicke T₁ (mm) in der vertikalen Richtung und eine Breite H₁ in einer von vorne nach hinten verlaufenden Richtung, die senkrecht zu der Längsrichtung des stoßabsorbierenden Materials ist, aufweist, um ein Verhältnis H₁/T₁ von 3 bis 5 bereitzustellen, während die untere Rippe (3b) eine derartige Dicke T₂ (mm) in der vertikalen Richtung und eine Breite H₂ in der von vorne nach hinten verlaufenden Richtung aufweist, um ein Verhältnis H₂/T₂ of 3 bis 5 bereitzustellen, und
wobei die stoßabsorbierende Struktur mindestens eine der folgenden Bedingungen (A) und (C) und mindestens eine der folgenden Bedingungen (B) und (D) erfüllt:
(A) die obere Rippe (3a) weist einen ersten weggeschnittenen Abschnitt (6a) auf, der sich in der Längsrichtung erstreckt und durch Wegschneiden eines Abschnitts gebildet wird, der benachbart ist und einen Rand aufweist, bei dem sich die obere äußere Oberfläche (41a) und die höhere freie Endfläche (4a) treffen,
(B) die untere Rippe (3b) weist einen zweiten weggeschnittenen Abschnitt (6b) auf, der sich in der Längsrichtung erstreckt und durch Wegschneiden eines Abschnitts gebildet wird, der benachbart ist und einen Rand aufweist, bei dem sich die untere äußere Oberfläche (41 b) und die niedrigere freie Endfläche (4b) treffen,
(C) der Basisbereich (2) weist einen dritten weggeschnittenen Abschnitt (7a) auf, der sich in der Längsrichtung erstreckt und durch Wegschneiden eines Abschnitts gebildet wird, der benachbart ist und einen Rand aufweist, bei dem sich die hintere Oberfläche (5b) und die obere Fläche (31a) treffen, und
(D) der Basisbereich (2) weist einen vierten weggeschnittenen Abschnitt (7b) auf, der sich in der Längsrichtung erstreckt und durch Wegschneiden eines Abschnitts gebildet wird, der benachbart ist und einen Rand aufweist, bei dem sich die hintere Oberfläche (5b) und die untere Fläche (31b) treffen,
wobei die Verkleidung (32) geformt wird, sodass Räume (34a, 34b) zwischen einem inneren Umfang der Verkleidung (32) und den oberen und unteren äußeren Oberflächen der höheren und niedrigeren Rippen (3a, 3b) festgelegt werden, um Teile der höheren und niedrigeren Rippen aufzunehmen, die geknickt werden, wenn der stoßabsorbierende Aufbau (51) einen externen Schlag in der von vorne nach hinten verlaufenden Richtung erfährt,
wobei die stoßabsorbierende Struktur (51) zwischen der Verkleidung (32) und der Verstärkung (33) angeordnet ist, wobei die höheren und niedrigeren freien Endflächen (4a, 4b) der höheren und niedrigeren Rippen (3a, 3b) der Verkleidung (32) gegenüberliegen.

2. Stoßdämpfer gemäß Anspruch 1, bei dem der synthetische Harzschaum ein geschäumter geformter Gegenstand aus expandierten thermoplastischen Harzperlen ist.

3. Stoßdämpfer gemäß Anspruch 2, bei dem die expandierten thermoplastischen Harzperlen expandierte Polyolefin-Harzperlen sind.

4. Stoßdämpfer gemäß Anspruch 2, bei dem der geschäumte geformte Gegenstand eine scheinbare Dichte von 0,022 bis 0,13 g/cm³ aufweist.

5. Stoßdämpfer gemäß Anspruch 1, ferner mit einer Hilfsrippe (11), die zwischen den höheren und niedrigeren Rippen (3a, 3b) vorgesehen ist und sich nach vorne von der vorderen Oberfläche des Basisbereichs (2) erstreckt.

6. Stoßdämpfer gemäß Anspruch 1, bei dem die höheren und niedrigeren Rippen (3a, 3b) zu den freien Enden hin divergieren, sodass die Mittellinien (C₁ und C₂) der höheren und niedrigeren Rippen (3a, 3b) in einem Winkel von bis zu 10° von einer Senkrechten zu der vorderen Oberfläche (5a) orientiert sind.

## Revendications

1. Pare-chocs conçu pour être fixé à un véhicule, comprenant
une membrure frontale d'amortissement (32),
un renforcement (33), et
une structure allongée d'absorption de chocs en une mousse de résine synthétique, interposée entre ladite membrure frontale (32) et ledit renforcement (33) et dont la direction, de l'avant vers l'arrière, est parallèle à une direction de déplacement dudit véhicule,
ladite structure d'absorption de chocs comprenant :
une région de base (2) s'étendant dans la direction longitudinale dudit matériau d'absorption de chocs et comportant des surfaces antérieure et postérieure (5a, 5b) tournées à l'opposé et des faces supérieure et inférieure (31a, 31b) tournées à l'opposé, solidarisant lesdites surfaces antérieure et postérieure (5a, 5b), et
deux nervures supérieure et inférieure (3a, 3b) à étendue longitudinale, espacées l'une de l'autre dans le sens vertical, s'étendant vers l'avant à partir de ladite surface antérieure (5a) de ladite région de base (2) et s'achevant, respectivement, par des faces extrêmes libres (4a, 4b) supérieure et inférieure,
lesdites nervures supérieure et inférieure (3a, 3b) étant respectivement pourvues de surfaces extérieures (41a, 41b) supérieure et inférieure, lesdites surfaces extérieures (41a, 41b) supérieure et inférieure fusionnant, respectivement, dans lesdites faces supérieure et inférieure (31a, 31 b) de ladite région de base (2), de sorte que ledit matériau d'absorption de chocs présente une section transversale configurée en U observée le long d'un plan perpendiculaire à la direction longitudinale,
ladite nervure supérieure (3a) offrant une épaisseur T₁ (mm) dans la direction verticale et une largeur H₁ dans une direction de l'avant vers l'arrière, perpendiculaire à la direction longitudinale dudit matériau d'absorption de chocs, propres à présenter un rapport H₁/T₁ de 3 à 5, cependant que ladite nervure inférieure (3b) offre une épaisseur T₂ (mm) dans la direction verticale, et une largeur H₂ dans la direction de l'avant vers l'arrière, propres à présenter un rapport H₂/T₂ de 3 à 5, et
ladite structure d'absorption de chocs satisfaisant à au moins l'une des conditions (A) et (C) ci-après, et à au moins l'une des conditions (B) et (D) ci-après :
(A) ladite nervure supérieure (3a) comporte une première région dépouillée (6a) s'étendant dans la direction longitudinale et obtenue par dépouille d'une région adjacente à un bord de rencontre de ladite surface extérieure (41a) supérieure et de ladite face extrême libre (4a) supérieure, et incluant ledit bord,
(B) ladite nervure inférieure (3b) présente une deuxième région dépouillée (6b) s'étendant dans la direction longitudinale et obtenue par dépouille d'une région adjacente à un bord de rencontre de ladite surface extérieure (41b) inférieure et de ladite face extrême libre (4b) inférieure, et incluant ledit bord,
(C) ladite région de base (2) offre une troisième région dépouillée (7a) s'étendant dans la direction longitudinale et obtenue par dépouille d'une région adjacente à un bord de rencontre de ladite surface postérieure (5b) et de ladite face supérieure (31a), et incluant ledit bord,
(D) ladite région de base (2) possède une quatrième région dépouillée (7b) s'étendant dans la direction longitudinale et obtenue par dépouille d'une région adjacente à un bord de rencontre de ladite surface postérieure (5b) et de ladite face inférieure (31b), et incluant ledit bord,
ladite membrure frontale (32) étant configurée de telle sorte que des espaces (34a, 34b) soient définis entre une périphérie intérieure de ladite membrure frontale (32) et lesdites surfaces extérieures, supérieure et inférieure, desdites nervures supérieure et inférieure (3a, 3b), afin de recevoir des parties desdites nervures supérieure et inférieure qui sont déformées en boucle lorsque la structure (51) d'absorption de chocs est soumise à un impact extérieur, de l'avant vers l'arrière.

2. Pare-chocs selon la revendication 1, dans lequel ladite mousse de résine synthétique est un article venu de moulage et de moussage en des perles expansées de résine thermoplastique.

3. Pare-chocs selon la revendication 2, dans lequel lesdites perles expansées de résine thermoplastique sont des perles expansées de résine polyoléfinique.

4. Pare-chocs selon la revendication 2, dans lequel ledit article venu de moulage et de moussage présente une densité apparente de 0, 022 à 0, 13 g/cm³.

5. Pare-chocs selon la revendication 1, comprenant en outre une nervure auxiliaire (11) prévue entre lesdites nervures supérieure et inférieure (3a, 3b) et s'étendant, vers l'avant, à partir de ladite surface antérieure de ladite région de base (2).

6. Pare-chocs selon la revendication 1, dans lequel les nervures supérieure et inférieure (3a, 3b) divergent en direction desdites extrémités libres, de façon telle que des axes médians (C₁ et C₂) des nervures supérieure et inférieure (3a, 3b) soient orientés selon un angle mesurant jusqu'à 10° à partir d'une perpendiculaire à ladite surface antérieure (5a).
